# FASCICULE DE BREVET EUROPEEN

(11) **EP 1 040 173 B1**
(45) Date de publication et mention de la délivrance du brevet: **06.10.2004**
(21) Numéro de dépôt: 98962493.7
(22) Date de dépôt: 17.12.1998
(51) Int. Cl.: C09J 175/04, C09J 175/06, C08G 18/10

(54) **ADHESIF POLYURETHANE RETICULABLE PAR L'HUMIDITE**
FEUCHTIGKEITSHÄRTENDER POLYURETHANKLEBSTOFF
MOISTURE-SETTING POLYURETHANE ADHESIVE

(30) Priorité: 19.12.1997 FR 9716201
(43) Date de publication de la demande: 04.10.2000
(73) Titulaire: Bostik Findley S.A., 92800 Puteaux (FR)
(72) Inventeur: MISKOVIC, Michel, F-60200 Compiègne (FR); BAUDUIN, François, F-60280 Margny-lès-Compiègne (FR); BOUTTEFORT, Patrick, F-60280 Margny-lès-Compiègne (FR); CHARTREL, Jean-François, F-60400 Cuts (FR)
(74) Mandataire: Ohresser, François
(86) Numéro de dépôt international: PCT/FR1998/002764
(87) Numéro de publication internationale: WO 1999/032569

(56) Documents cités:
- EP-A- 0 293 602
- EP-A- 0 383 505
- WO-A-98/58003
- US-A- 4 585 819
- DATABASE WPI Section Ch, Week 9221 Derwent Publications Ltd., London, GB; Class A28, AN 92-170722 XP002073045 & JP 04 106179 A (SEKISUI CHEM IND CO LTD) , 8 avril 1992
- DATABASE WPI Section Ch, Week 8143 Derwent Publications Ltd., London, GB; Class A25, AN 81-78821D XP002073046 & JP 56 116770 A (SUMITOMO BAKELITE CO) , 12 septembre 1981

## Description

L'invention concerne un adhésif polyuréthane réticulable par l'humidité, un procédé de collage d'un textile et d'un matériau cellulaire au moyen dudit adhésif et les assemblages collés ainsi obtenus.

Le collage d'un textile et d'un matériau cellulaire est généralement réalisé par flammage. Le flammage consiste à modifier l'état de surface du matériau par un traitement à la flamme pour le rendre apte au collage.

Le collage de textiles sur des films d'un matériau cellulaire tel qu'une mousse est mis en oeuvre industriellement sur une chaîne de production comprenant les étapes successives du flammage de la mousse, de pose du textile sur la mousse, de calandrage et de bobinage de l'assemblage collé final.

Cette technique présente les inconvénients suivants :
- une partie de la mousse est détruite lors du traitement à la flamme,
- l'utilisation de la flamme rend le procédé dangereux du point de vue du risque d'incendie d'une part, et de la production éventuelle de gaz nocifs pour les utilisateurs et l'environnement, d'autre part,
- la cadence de production est limitée à 50 mètres par minute,
- il est difficile de contrôler le flammage des films minces ce qui ne permet pas de former des assemblages collés de faible épaisseur,
- les mousses de polyuréthane ne peuvent pas être traitées selon cette technique,
- et enfin, le flammage rigidifie la surface de la mousse ce qui rend la surface textile de l'assemblage dure au toucher.

Il a maintenant été trouvé que l'on peut remédier aux inconvénients précités en procédant au collage du textile sur le matériau cellulaire au moyen d'un nouvel adhésif, lequel adhésif est de préférence déposé sur le textile.

L'invention se rapporte donc à un adhésif polyuréthane réticulable par l'humidité qui comprend :
a) 70 à 95 % en poids d'un prépolymère polyuréthane obtenu par polyaddition d'au moins un polyol avec au moins un polyisocyanate et,
b) 5 à 30 % en poids d'une polyalphaoléfine essentiellement amorphe, la teneur en groupes NCO libres représentant 1 à 20 % en poids de l'adhésif.

De préférence, l'adhésif polyuréthane réticulable par l'humidité comprend :
a) 85 à 95 % en poids d'un prépolymère de polyuréthane obtenu par polyaddition d'au moins un polyol avec au moins un polyisocyanate et,
b) 5 à 15 % en poids d'une polyoléfine essentiellement amorphe, la teneur en groupes NCO libres représentant 1 à 10 % en poids de l'adhésif.

Le polyol entrant dans la constitution du prépolymère est généralement choisis parmi les polyéthers polyols, les polyesters polyols et les polyols insaturés.

Les polyéthers polyols sont généralement choisis parmi les polyéthers polyols aliphatiques et aromatiques, et les mélanges de ces composés. De préférence, leur masse moléculaire moyenne est comprise entre 200 et 9000 et leur fonctionnalité hydroxyle est comprise entre 2 et 4,6.

A titre d'exemples de polyéthers polyols aliphatiques, on peut citer les dérivés oxyalkylés de diols tels que les polypropylène-glycols, ou de triols tels que le glycérol, le triméthylolpropane et l'hexane-1,2,6-triol, les polymères d'oxyde d'éthylène, de propylène ou de butylène, les copolymères d'oxyde d'éthylène et d'oxyde de propylène, les composés précités à terminaison silanyle et les dérivés oxyalkylés de diphényles tels que les dérivés oxyéthylénés ou oxypropylénés en position 4,4' du diphénylméthane.

De préférence, on utilise les dérivés oxypropylés du glycérol, les polymères d'oxyde de propylène ou de butylène et les copolymères d'oxyde d'éthylène et d'oxyde de propylène.

Les polyesters polyols sont généralement choisis parmi les polyesters polyols aliphatiques et aromatiques, et les mélanges de ces composés. De préférence, leur masse moléculaire moyenne est comprise entre 250 et 7000 et leur fonctionnalité hydroxyle est comprise entre 2 et 3.

A titre d'exemples, on peut citer les polyesters polyols résultant de la condensation de polyols aliphatiques, cycliques ou aromatiques tels que l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthytdiméthanolanüne et les mélanges de ces composés avec un acide tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone.

De préférence, on utilise les polyesters polyols résultant de la condensation de l'éthanediol, du 1,3-propanediol et/ou du 1,6-hexanediol avec l'acide adipique et/ou l'acide phtalique.

Les polyols insaturés sont généralement choisis parmi les polyols et les mélanges de polyols ayant de préférence une masse moléculaire comprise entre 1200 et 3000.

A titre d'exemples, on peut citer le polybutadiène et le polyisoprène à terminaisons hydroxylées.

De manière avantageuse, les polyols précités sont amorphes.

Les polyols précités peuvent également être utilisés en mélange avec d'autres composés hydroxylés.

On peut ainsi utiliser un monol ou un mélange de monols, en particulier les poly(éthylène/butylène)monols tels que le KRATON LIQUID™ L-1203 Polymer commercialisé par Shell, ou un polyol ou un mélange de polyols choisis parmi les poly(éthyiènelbutylène)diols tels que le KRATON LIQUID™ Polymer HPVM-2203 commercialisé par Shell, les copolymères de l'éthylène, de l'acétate de vinyle et de l'acrylate de 2-hydroxyéthyte tels que l'OREVAC® 9402 commercialisé par ELF ATOCHEM, les résines indène/coumarone modifiées par du phénol, par exemple NOVARES CA120 commercialisée par VFT, et les résines tackifiantes hydroxylées, par exemple REAGEM commercialisée par DRT.

Le monol et le polyol précités représentent respectivement 0 à 10 % et 0 à 25 % en poids des polyols.

Le polyisocyanate est généralement choisi parmi les polyisocyanates aliphatiques, cycloaliphatiques ou aromatiques bien connus de l'homme du métier, ainsi que les mélanges de ces composés.

A titre d'exemples de polyisocyanates aliphatiques, on peut citer l'hexaméthylènediisocyanate (HMDI), l'éthylënediisocyanate, l'éthylidène-diisocyanate, le propylènediisocyanate, le butylènediisocyanate, le dichloro-hexaméthylènediisocyanate, le furfurylènediisocyanate et les mélanges de ces composés.

A titre d'exemples de polyisocyanates cycloaliphatiques, on peut citer l'isophoronediisocyanate (IPDI), le cyclopentylène-1,3-diisocyanate, le cyclohexylène-1,4-diisocyanate, le cyclohexylène-1,2-diisocyanate et les mélanges de ces composés.

A titre d'exemples de polyisocyanates aromatiques, on peut citer le diphénylméthanediisocyanate, notamment le 4,4'-diphénylméthanediisocyanate (MDI), le 2,4'-diphénylméthanediisocyanate et le 2,2'-diphénylméthanediisocyanate, le toluènediisocyanate, notamment le 2,4-toluènediisocyanate (TDI) et le 2,6-toluènediisocyanate, le 2,2-diphénytpropane-4,4'-diisocyanate, le p-phénylènediisocyanate, le m-phénylènediisocyanate, le xylènediisocyanate, le 1,4-naphtalènediisocyanate, le 1,5-naphtylènediisocyanate, l'azobenzène-4,4'-diisocyanate, le diphénylsulfone-4,4'-diisocyanate, le 1-chlorobenzène-2,4-diisocyanate et les mélanges de ces composés.

De préférence, on utilise les diisocyanates, et plus particulièrement le MDI, le 2,4'-diphénylméthanediisocyanate, le 2,2'-diphénylméthanediisocyanate, le TDI, le 2,6-toluènediisocyanate, le HMDI et l'IPDI.

Le prépolymère polyuréthane est obtenu par polyaddition d'au moins un polyol et d'au moins un polyisocyanate dans des quantités telles que la teneur en groupes isocyanates du prépolymère est comprise entre 1 et 25 %, et de préférence 2 et 15 % en poids.

La nature du prépolymère polyuréthane est susceptible d'influer sur la dureté de l'adhésif selon l'invention. A cet égard, on préfère les prépolymères polyuréthane obtenus par réaction :
- d'un mélange de polyols constitué :
   - de 20 à 100 % en poids d'un polyester polyol aliphatique,
   - et de 0 à 80 % en poids d'un polyester polyol aliphatico-aromatique
- et d'au moins un polyisocyanate.

On préfère particulièrement les prépolymères polyuréthane obtenus par réaction :
- d'un mélange de polyols constitué:
   - de 30 à 50 % en poids d'un polyester polyol aliphatique,
   - et de 70 à 50 % en poids d'un polyester polyol aliphatico-aromatique
- et d'au moins un polyisocyanate.

La polyalphaoléfine essentiellement amorphe (en anglais "amorphous polyalphaolefin" ou APAO) est généralement choisie parmi les polymères résultant de la copolymérisation de monomères choisis parmi l'éthylène, le propène, le 1-butène et le 1-hexène en présence d'un catalyseur de type Ziegler-Natta, et les mélanges de ces copolymères. A titre d'exemples, on peut citer le Vestopfast® , notamment référencé 508, commercialisé par Hüls, l'Eastoftex® commercialisé par Eastman Chemical et le Rextac® commercialisé par Rexen. On préfère les copolymères ayant une masse moléculaire comprise entre 7300 et 23800 et une température de transition vitreuse comprise entre -27 et -36°C. De manière avantageuse, on utilise les copolymères ayant un point de ramollissement Bille et Anneau (Norme DIN 52011) compris entre 80 et 160°C.

Les adhésifs réticulables par l'humidité selon l'invention peuvent comprendre des additifs usuels connus de l'homme du métier tels que des charges, des agents tackifiants, des plastifiants, des promoteurs d'adhérence tels que des composés comportant des groupes silanyles et des catalyseurs qui accélèrent la réticulation par l'humidité, par exemple des catalyseurs métalliques tels que le dilaurate de dibutylétain ou des catalyseurs aminés tels que le dimorpholinodiéthyléther.

On peut préparer les adhésifs polyuréthanes réticulables par l'humidité selon l'invention en faisant réagir les polyols et le cas échéant les autres composés hydroxylés, éventuellement déshydratés à haute température sous vide, avec les polyisocyanates à l'abri de l'humidité et, le cas échéant sous gaz protecteur, à une température pouvant varier de 90 à 120°C. Après le démarrage de la réaction, on ajoute par mélange la polyalphaoléfine dans les rapports quantitatifs souhaités et on laisse la réaction se poursuivre jusqu'à ce que l'on obtienne la teneur souhaitée en NCO. A l'adhésif ainsi obtenu, on ajoute par mélange les éventuels additifs.

Les adhésifs polyuréthane réticulables par l'humidité selon l'invention sont particulièrement adaptés au collage de textiles, tels que des mailles (tricots), des velours et des chaînes et trames synthétiques, par exemple en polyamide ou en polytéréphtalate d'éthylène sur des mousses par exemple en polyéthylène, en polypropylène, en polyéther, en polyester ou en polyuréthane.

Les adhésifs selon l'invention permettent de réaliser un collage dans des conditions industrielles, c'est-à-dire à une cadence élevée de l'ordre de 300 mètres par minute.

Les adhésifs selon l'invention présentent en outre un excellent pouvoir piégeant (aptitude de l'adhésif à fixer un matériau) et une excellente souplesse au toucher.

Les textiles collés sur un film de mousse à l'aide de l'adhésif selon l'invention peuvent être par exemple utilisés en tant que revêtements muraux, revêtements pour des sièges ou pour l'habillage intérieur des automobiles.

Les exemples qui suivent permettent d'illustrer l'invention.

### EXEMPLE 1

Dans un réacteur sous atmosphère d'azote, on introduit les composés suivants :
- 21 parties en poids de 4,4'-diphénylméthanediisocyanate (MDI),
- 25 parties en poids du produit de condensation d'acide adipique et d'un mélange de 2,2-diméthyl-1,3-propanediol, 1,2-éthanediol et 1,6-hexanediol (polyester polyol aliphatique ; indice d'hydroxyle : 18-24 ; masse moléculaire : 5000 ; fonctionnalité OH : 2 ; désignation commerciale : Dynacoll® 7250-HÜLS),
- 44 parties en poids du produit de condensation d'un mélange d'acide 1,3-benzènedicarboxylique et d'acide adipique et d'un mélange de 1,4-benzènedicarboxylate, 2,2-diméthyl-1,3-propanediol, 1,2-éthanediol et 3-hydroxy-2,2-diméthylpropyl-3-hydroxy-2,2-diméthylpropanoate (polyester polyol aliphatico-aromatique ; indice hydroxyle: 31-39 ; masse moléculaire: 3000 ; fonctionnalité OH : 2 ; désignation commerciale: Dynacoll® 7130-HÜLS).

Le mélange est porté à une température de l'ordre de 95 à 100°C. Lorsque la température est stable, on introduit dans le réacteur 10 parties en poids de copolymère d'éthylène, de 1-propène et de 1-butène (masse moléculaire : 11800 : température de transition vitreuse : -31°C; viscosité à 190°C: 7800 mPa.s; point de ramollissement Bille et Anneau (Norme DIN 52011) : 86°C ; dénomination commerciale : Vestoplast® 508-HÜLS).

Après achèvement de la réaction, on récupère un adhésif blanc, solide à 23°C, ayant une teneur en NCO égale à 5,2 % mesurée selon la norme AFNOR T52-132.

A 130°C, l'adhésif est un liquide blanc qui présente un pouvoir collant et une viscosité Brookfield égale à 2600 mPa.s. En refroidissant, l'adhésif présente des propriétés élastiques.

On utilise l'adhésif pour réaliser industriellement le contre-collage d'un film de mousse de polyuréthane sur une maille textile en polyamide. L'adhésif fondu à 120°C est déposé au moyen d'une buse à lèvre fixe de 300 mm de longueur (grammage de l'adhésif : 8 g/m²) sur la maille textile qui défile à la vitesse de 100 mètres par minute.

On constate qu'il n'existe aucune remontée de l'adhésif sur la buse et que le mouillage de la maille par l'adhésif est satisfaisant. On observe aussi que l'adhésif ne traverse pas la maille textile.

L'assemblage obtenu est placé dans une enceinte climatique à 23°C et 50 % d'humidité relative pendant 1 semaine.

On découpe l'assemblage en bandes de 25 mm de large et on renforce la face extérieure en polyuréthane avec un ruban adhésif. Les bandes obtenues sont soumises à une traction en pelage 180° à la vitesse constante de 100 mm/min (machine d'essai Type DY 30 ; ADAMEL-LHOMARGY). Les mesures sont effectuées sur 5 bandes.

La résistance au pelage est égale à 6,3 N/5 cm (avec le délaminage des supports).

### EXEMPLE 2 (Comparatif)

On procède dans les conditions de l'exemple 1 modifiées en ce que l'on n'utilise pas de Vestopfast® 508.

On récupère un adhésif solide à 23°C, ayant une teneur en NCO égale à 5,7 %, une viscosité Brookfield à 130°C égale à 2300 mPa.s et qui présente un pouvoir collant plus faible que celui de l'exemple 1.

On observe une remontée du produit sur la buse et l'absence de mouillage de la maille textile par l'adhésif lorsque la vitesse de défilement de la maille textile est supérieure à 10 mètres par minute.

L'assemblage collé obtenu à la vitesse de 10 mètres par minute présente une résistance au pelage égale à 6,05 N/5 cm (avec le délaminage des supports) après une semaine de polymérisation.

### EXEMPLE 3

On procède dans les conditions de l'exemple 1 modifiées en ce que :
1/ On utilise 21,5 parties en poids de MDI, 24 parties en poids de Dynacolf® 7250, 43 parties en poids de Dynacoll® 7130 et 9,9 parties en poids de Vestoplast® 508,
2/ et qu'après achèvement de la réaction, on introduit 1,6 partie en poids de gamma aminopropyltriméthoxysilane (dénomination commerciale : Silquest A-1110 silane-OSI) et on maintient à 75-80°C jusqu'à l'obtention d'un taux de NCO constant.

L'adhésif récupéré est solide à 23°C et présente une teneur en NCO égale à 5,1 % et une viscosité Brookfield à 130°C égale à 3200 mPa.s. En refroidissant, cet adhésif présente des propriétés élastiques.

## Revendications

1. Procédé de collage d'un textile sur un matériau consistant à déposer l'adhésif sur le textile, ledit adhésif étant un adhésif polyuréthane réticulable par l'humidité, comprenant :
a) 70 à 95 % en poids d'un prépolymère polyuréthane obtenu par polyaddition d'au moins un polyol avec au moins un polyisocyanate et,
b) 5 à 30 % en poids d'une polyalphaoléfine essentiellement amorphe, la teneur en groupes NCO libres représentant 1 à 20 % en poids de l'adhésif.

2. Procédé selon la revendication 1, **caractérisé en ce que** le textile est une maille, un velours ou des chaînes et trames synthétiques.

3. Procédé selon l'une des revendications 1 à 2, dans lequel le matériau est un film de mousse, notamment en polyéthylène, en polypropylène, en polyéther, en polyester ou en polyuréthane.

4. Procédé selon l'une des revendications 1 à 3 dans lequel l'adhésif est déposé au moyen d'une buse à lèvres.

5. Procédé selon l'une des revendications 1 à 4, dans lequel l'adhésif comprend :
a) 85 à 95 % en poids d'un prépolymère de polyuréthane obtenu par polyaddition d'au moins un polyol avec au moins un polyisocyanate et,
b) 5 à 15 % en poids d'une polyoléfine essentiellement amorphe,
la teneur en groupes NCO libres représentant 1 à 10 % en poids de l'adhésif.

6. Procédé selon l'une des revendications 1 et 5, **caractérisé en ce que** la polyalphaoléfine est choisie parmi les polymères résultant de la copolymérisation de monomères choisis parmi l'éthylène, le propène, le 1-butène et le 1-hexène en présence d'un catalyseur de type Ziegler-Natta, et les mélanges de ces copolymères.

7. Procédé selon la revendication 6, **caractérisé en ce que** la polyalphaoléfine a une masse moléculaire comprise entre 7300 et 23800 et une température de transition vitreuse comprise entre -27°C et -36°C.

8. Procédé selon l'une des revendications 1 à 7, **caractérisé en ce que** le polyol est choisi parmi les polyéthers polyols, les polyesters polyols et les polyols insaturés.

9. Procédé selon la revendication 8, **caractérisé en ce que** le polyol est choisi parmi les polyesters polyols ayant une masse moléculaire moyenne comprise entre 250 et 7000 et une fonctionnalité OH comprise entre 2 et 3.

10. Procédé selon la revendication 9, **caractérisé en ce que** les polyesters polyols résultent de la condensation de polyols choisis parmi l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyldiméthanolamine et les mélanges de ces composés avec un acide tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone.

11. Procédé selon la revendication 10, **caractérisé en ce que** les polyesters polyols résultent de la condensation de l'éthanediol, du 1,3-propanediol et/ou du 1,6-hexanediot avec l'acide adipique et/ou l'acide phtalique.

12. Procédé selon l'une des revendications 1 à 11, **caractérisé en ce que** le polyisocyanate est choisi parmi les polyisocyanates aliphatiques, cycloaliphatiques ou aromatiques, et les mélanges de ces composés.

13. Procédé selon la revendication 12, **caractérisé en ce que** le polyisocyanate est un diisocyanate.

14. Procédé selon la revendication 13 **caractérisé en ce que** le diisocyanate est le MDI, le 2,4'-diphénylméthanediisocyanate, le 2,2'-diphénylméthane-diisocyanate, le TDI, le 2,6-toluènediisocyanate, le HMDI ou l'IPDI.

15. Procédé selon l'une des revendications 1 à 14, **caractérisé en ce que** le prépolymère polyuréthane est obtenu par réaction :
- d'un mélange de polyols constitué :
• de 20 à 100 % en poids d'un polyester polyol aliphatique,
• et de 0 à 80 % en poids d'un polyester polyol aliphatico-aromatique
- et d'au moins un polyisocyanate.

16. Procédé selon l'une des revendications 1 à 15, **caractérisé en ce que** le prépolymère polyuréthane est obtenu par réaction :
- d'un mélange de polyols constitué :
• de 30 à 50 % en poids d'un polyester polyol aliphatique,
• et de 70 à 50 % en poids d'un polyester polyol aliphatico-aromatique
- et d'au moins un polyisocyanate.

17. Adhésif polyuréthane réticulable par l'humidité, étant constitué par :
a) 70 à 95 % en poids d'un prépolymère polyuréthane obtenu par polyaddition d'au moins un polyol avec au moins un polyisocyanate et,
b) 5 à 30 % en poids d'une polyalphaoléfine essentiellement amorphe obtenue par copolymérisation de monomères choisis parmi l'éthylène, le propène, le 1-butène et le 1-hexène ayant une masse moléculaire comprise entre 7300 et 23800 et une température de transition vitreuse comprise entre -27°C et -36°C, la teneur en groupes NCO libres représentant 1 à 20 % en poids de l'adhésif.

18. Adhésif selon la revendication 17 dans lequel le polyol est choisi parmi les polyéthers polyols, les polyesters polyols et les polyols insaturés et le polyisocyanate est choisi parmi les polyisocyanates aliphatiques, cycloaliphatiques ou aromatiques, et les mélanges de ces composés.

19. Adhésif selon la revendication 18 dans lequel le polyisocyanate est choisi parmi le 4,4'-diphénylméthanediisocyanate, le 2,4'-diphénytméthanediisocyanate, le 2,2'-diphénylméthanediisocyanate, le 2,4-totuènediisocyanate, le 2,6-toluènediisocyanate, le HMDI ou l'IPDI.

20. Adhésif selon l'une des revendications 17 à 19 dans lequel le prépolymère polyuréthane est obtenu par réaction :
- d'un mélange de polyols constitué :
• de 20 à 100 % en poids d'un polyester polyol aliphatique,
• et de 0 à 80 % en poids d'un polyester polyol aliphatico-aromatique
- et d'au moins un polyisocyanate.

21. Assemblage comprenant un textile et un matériau collés au moyen de l'adhésif selon l'une des revendications 17 à 20.

## Patentansprüche

1. Verfahren zum Aufkleben eines textilen Flächengebildes auf ein Material, bei dem man den Klebstoff auf das textile Flächengebilde aufbringt und dabei als Klebstoff einen feuchtigkeitsvernetzenden Polyurethan-Klebstoff, der:
a) 70 bis 95 Gew.-% eines durch Polyaddition mindestens eines Polyols an mindestens ein Polyisocyanat erhaltenen Polyurethan-Prepolymers und
b) 5 bis 30 Gew.-% eines im wesentlichen amorphen Poly-alpha-olefins
enthält und einen Gehalt an freien NCO-Gruppen von 1 bis 20 Gew.-%, bezogen auf den Klebstoff, aufweist,
verwendet.

2. Verfahren nach Anspruch 1, **dadurch gekennzeichnet, daß** es sich bei dem textilen Flächengebilde um eine Maschenware, ein Velours oder synthetische Kett -und Schußfäden handelt.

3. Verfahren nach Anspruch 1 oder 2, bei dem es sich bei dem Material um eine Schaumstoff-Folie, insbesondere aus Polyethylen, Polypropylen, Polyether, Polyester oder Polyurethan, handelt.

4. Verfahren nach einem der Ansprüche 1 bis 3, bei dem man den Klebstoff mit einer Schlitzdüse aufbringt.

5. Verfahren nach einem der Ansprüche 1 bis 4, bei dem der Klebstoff:
a) 85 bis 95 Gew.-% eines durch Polyaddition mindestens eines Polyols an mindestens ein Polyisocyanat erhaltenen Polyurethan-Prepolymers und
b) 5 bis 15 Gew.-% eines im wesentlichen amorphen Polyolefins
enthält und einen Gehalt an freien NCO-Gruppen von 1 bis 10 Gew.-%, bezogen auf den Klebstoff, aufweist.

6. Verfahren nach einem der Ansprüche 1 bis 5, **dadurch gekennzeichnet, daß** das Poly-alpha-olefin unter Polymeren, die sich durch Copolymerisation von unter Ethylen, Propylen, 1-Buten und 1-Hexen ausgewählten Monomeren in Gegenwart eines Ziegler-Natta-Katalysators ergeben, und Gemischen dieser Copolymere ausgewählt wird.

7. Verfahren nach Anspruch 6, **dadurch gekennzeichnet, daß** das Poly-alpha-olefin eine Molekularmasse zwischen 7300 und 23.800 und eine Glasübergangstemperatur zwischen -27 und -36°C aufweist.

8. Verfahren nach einem der Ansprüche 1 bis 7, **dadurch gekennzeichnet, daß** das Polyol unter Polyetherpolyolen, Polyesterpolyolen und ungesättigten Polyolen ausgewählt wird.

9. Verfahren nach Anspruch 8, **dadurch gekennzeichnet, daß** das Polyol unter Polyesterpolyolen mit einem mittleren Molekulargewicht zwischen 250 und 7000 und einer OH-Funktionalität zwischen 2 und 3 ausgewählt wird.

10. Verfahren nach Anspruch 9, **dadurch gekennzeichnet, daß** sich die Polyesterpolyole aus der Kondensation von unter Ethandiol, 1,2-Propandiol, 1,3-Propandiol, Glycerin, Trimethylolpropan, 1,6-Hexandiol, 1,2,6-Hexantriol, Butendiol, Saccharose, Glucose, Sorbit, Pentaerythrit, Mannit, Triethanolamin, N-Methyldimethanolamin und Gemischen dieser Verbindungen ausgewählten Polyolen mit einer Säure, wie 1,6-Hexandisäure, Dodecandisäure, Azelainsäure, Sebacinsäure, Adipinsäure, 1,18-Octadecandisäure, Phthalsäure, Bernsteinsäure und Gemischen dieser Säuren, einem ungesättigten Anhydrid, wie Maleinsäure- oder Phthalsäureanhydrid, oder einem Lacton, wie Caprolacton, ergeben.

11. Verfahren nach Anspruch 10, **dadurch gekennzeichnet, daß** sich die Polyesterpolyole aus der Kondensation von Ethandiol, 1,3-Propandiol und/oder 1,6-Hexandiol mit Adipinsäure und/oder Phthalsäure ergeben.

12. Verfahren nach einem der Ansprüche 1 bis 11, **dadurch gekennzeichnet, daß** das Polyisocyanat unter aliphatischen, cycloaliphatischen oder aromatischen Polyisocyanaten und Gemischen dieser Verbindungen ausgewählt wird.

13. Verfahren nach Anspruch 12, **dadurch gekennzeichnet, daß** es sich bei dem Polyisocyanat um ein Diisocyanat handelt.

14. Verfahren nach Anspruch 13, **dadurch gekennzeichnet, daß** es sich bei dem Diisocyanat um MDI, 2,4'-Diphenylmethandiisocyanat, 2,2'-Diphenylmethandiisocyanat, TDI, 2,6-Toluoldiisocyanat, HMDI oder IPDI handelt.

15. Verfahren nach einem der Ansprüche 1 bis 14, **dadurch gekennzeichnet, daß** man das Polyurethan-Prepolymer durch Umsetzung:
- eines Polyolgemischs aus:
• 20 bis 100 Gew.-% eines aliphatischen Polyesterpolyols
• und 0 bis 80 Gew.-% eines aliphatischaromatischen Polyesterpolyols
- mit mindestens einem Polyisocyanat
erhält.

16. Verfahren nach einem der Ansprüche 1 bis 15, **dadurch gekennzeichnet, daß** man das Polyurethan-Prepolymer durch Umsetzung:
- eines Polyolgemischs aus:
• 30 bis 50 Gew.-% eines aliphatischen Polyesterpolyols
• und 70 bis 50 Gew.-% eines aliphatischaromatischen Polyesterpolyols
- mit mindestens einem Polyisocyanat erhält.

17. Feuchtigkeitsvernetzender Polyurethan-Klebstoff, der aus:
a) 70 bis 95 Gew.-% eines durch Polyaddition mindestens eines Polyols an mindestens ein Polyisocyanat erhaltenen Polyurethan-Prepolymers und
b) 5 bis 30 Gew.-% eines im wesentlichen amorphen Poly-alpha-olefins, das durch Copolymerisation von unter Ethylen, Propylen, 1-Buten und 1-Hexen ausgewählten Monomeren erhältlich ist, eine Molekularmasse zwischen 7300 und 23.800 und eine Glasübergangstemperatur zwischen -27 und -36°C aufweist und einen Gehalt an freien NCO-Gruppen von 1 bis 20 Gew.-%, bezogen auf den Klebstoff, aufweist,
besteht.

18. Klebstoff nach Anspruch 17, bei dem das Polyol unter Polyetherpolyolen, Polyesterpolyolen und ungesättigten Polyolen und das Polyisocyanat unter aliphatischen, cycloaliphatischen oder aromatischen Polyisocyanaten und Gemischen dieser Verbindungen ausgewählt ist.

19. Klebstoff nach Anspruch 18, bei dem das Polyisocyanat unter 4,4'-Diphenylmethandiisocyanat, 2,4'-Diphenylmethandiisocyanat, 2,2'-Diphenylmethandiisocyanat, 2,4-Toluoldiisocyanat, 2,6-Toluoldiisocyanat, HMDI oder IPDI ausgewählt ist.

20. Klebstoff nach einem der Ansprüche 17 bis 19, bei dem das Polyurethan-Prepolymer durch Umsetzung:
- eines Polyolgemischs aus:
• 20 bis 100 Gew.-% eines aliphatischen Polyesterpolyols
• und 0 bis 80 Gew.-% eines aliphatischaromatischen Polyesterpolyols
- mit mindestens einem Polyisocyanat erhalten wird.

21. Aufbau, enthaltend ein textiles Flächengebilde und ein Material, die mit Hilfe des Klebstoffs nach einem der Ansprüche 17 bis 20 miteinander verklebt sind.

## Claims

1. Process for the adhesive bonding of a textile to a material consisting in depositing the adhesive on the textile, the said adhesive being a moisture-crosslinkable polyurethane adhesive comprising:
a) 70 to 95% by weight of a polyurethane prepolymer obtained by polyaddition of at least one polyol to at least one polyisocyanate and,
b) 5 to 30% by weight of an essentially amorphous poly-α-olefin,
the content of free NCO groups representing 1 to 20% by weight of the adhesive.

2. Process according to Claim 1, **characterized in that** the textile is a mesh, a velvet or synthetic warps and wefts.

3. Process according to either of Claims 1 and 2 in which the material is a foam film, in particular made of polyethylene, of polypropylene, of polyether, of polyester or of polyurethane.

4. Process according to one of Claims 1 to 3, in which adhesive is deposited by means of a lip nozzle.

5. Process according to one of Claims 1 to 4, in which the adhesive comprises:
a) 85 to 95% by weight of a polyurethane prepolymer obtained by polyaddition of at least one polyol to at least one polyisocyanate and,
b) 5 to 15% by weight of an essentially amorphous polyolefin,
the content of free NCO groups representing 1 to 10% by weight of the adhesive.

6. Process according to either of Claims 1 and 5, **characterized in that** the poly-α-olefin is chosen from polymers resulting from the copolymerization of monomers chosen from ethylene, propene, 1-butene and 1-hexene in the presence of a catalyst of Ziegler-Natta type and mixtures of these copolymers.

7. Process according to Claim 6, **characterized in that** the poly-α-olefin has a molecular mass of between 7300 and 23 800 and a glass transition temperature of between -27°C and -36°C.

8. Process according to one of Claims 1 to 7, **characterized in that** the polyol is chosen from polyether polyols, polyester polyols and unsaturated polyols.

9. Process according to Claim 8, **characterized in that** the polyol is chosen from polyester polyols having an average molecular mass of between 250 and 7000 and an OH functionality of between 2 and 3.

10. Process according to Claim 9, **characterized in that** the polyester polyols result from the condensation of polyols chosen from ethanediol, 1,2-propanediol, 1,3-propanediol, glycerol, trimethylolpropane, 1,6-hexanediol, 1,2,6-hexanetriol, butenediol, sucrose, glucose, sorbitol, pentaerythritol, mannitol, triethanolamine, N-methyldimethanolamine and mixtures of these compounds with an acid, such as 1,6-hexanedioic acid, dodecanedioic acid, azelaic acid, sebacic acid, adipic acid, 1,18-octadecanedioic acid, phthalic acid, succinic acid and mixtures of these acids, an unsaturated anhydride, such as maleic or phthalic anhydride, or a lactone, such as caprolactone.

11. Process according to Claim 10, **characterized in that** the polyester polyols result from the condensation of ethanediol, 1,3-propanediol and/or 1,6-hexanediol with adipic acid and/or phthalic acid.

12. Process according to one of Claims 1 to 11, **characterized in that** the polyisocyanate is chosen from aliphatic, cycloaliphatic or aromatic polyisocyanates and mixtures of these compounds.

13. Process according to Claim 12, **characterized in that** the polyisocyanate is a diisocyanate.

14. Process according to Claim 13, **characterized in that** the diisocyanate is MDI, 2,4'-diphenylmethane diisocyanate, 2,2'-diphenylmethane diisocyanate, TDI, 2,6-toluene diisocyanate, HMDI or IPDI.

15. Process according to one of Claims 1 to 14, **characterized in that** the polyurethane prepolymer is obtained by reaction:
- of a mixture of polyols composed:
• of 20 to 100% by weight of an aliphatic polyester polyol,
• and of 0 to 80% by weight of an aliphatic/aromatic polyester polyol
- and of at least one polyisocyanate.

16. Process according to one of Claims 1 to 15, **characterized in that** the polyurethane prepolymer is obtained by reaction:
- of a mixture of polyols composed:
• of 30 to 50% by weight of an aliphatic polyester polyol,
• and of 70 to 50% by weight of an aliphatic/aromatic polyester polyol
- and of at least one polyisocyanate.

17. Moisture-crosslinkable polyurethane adhesive, being composed of:
a) 70 to 95% by weight of a polyurethane prepolymer obtained by polyaddition of at least one polyol to at least one polyisocyanate and,
b) 5 to 30% by weight of an essentially amorphous poly-α-olefin obtained by copolymerization of monomers chosen from ethylene, propene, 1-butene and 1-hexene having a molecular mass of between 7300 and 23 800 and a glass transition temperature of between -27°C and -36°C, the content of free NCO groups representing 1 to 20% by weight of the adhesive.

18. Adhesive according to Claim 17, in which the polyol is chosen from polyether polyols, polyester polyols and unsaturated polyols and the polyisocyanate is chosen from aliphatic, cycloaliphatic or aromatic polyisocyanates and mixtures of these compounds.

19. Adhesive according to Claim 18, in which the polyisocyanate is chosen from 4,4'-diphenylmethane diisocyanate, 2,4'-diphenylmethane diisocyanate, 2,2'-diphenylmethane diisocyanate, 2,4-toluene diisocyanate, 2,6-toluene diisocyanate, HMDI or IPDI.

20. Adhesive according to one of Claims 17 to 19, in which the polyurethane prepolymer is obtained by reaction:
- of a mixture of polyols composed:
• of 20 to 100% by weight of an aliphatic polyester polyol,
• and of 0 to 80% by weight of an aliphatic/aromatic polyester polyol
- and of at least one polyisocyanate.

21. Assembly comprising a textile and a material adhesively bonded by means of the adhesive according to one of Claims 17 to 20.
